# EUROPEAN PATENT APPLICATION

(11) **EP 4 625 319 A1**
(43) Date of publication of application: **01.10.2025**
(21) Application number: 25166180.7
(22) Date of filing: 25.03.2025
(51) Int. Cl.: G06T 7/00, G06T 7/11, G01N 21/88, H01M 10/00

(54) **SYSTEM AND APPARATUS FOR INSPECTING COATING STATE AND AN OPERATION METHOD THEREOF**

(30) Priority: 25.03.2024 KR 20240040478
(71) Applicant: SK On Co., Ltd., Seoul 03161 (KR)
(72) Inventor: HONG, Hyo Sung, 34124 Daejeon (KR); KIM, Jae Hun, 34124 Daejeon (KR); HONG, Min Jeong, 34124 Daejeon (KR)
(74) Representative: Stolmár & Partner Patentanwälte PartG mbB

(57) **Abstract**

The present disclosure relates to a system and apparatus for inspecting a coating state and an operation method thereof. The operation method of the apparatus for inspecting a coating state according to an embodiment of the present disclosure may include: using a photographing module, photographing at least a partial area of a base plate which comprises a first area coated with a first material and a second area not coated with the first material, wherein a partial area of the first material and a partial area of the second area 31b are coated with a second material, to obtain an inspection image; generating a brightness histogram related to a brightness of the inspection image based on a pre-trained brightness distribution estimation model; and estimating an overlapping section where the second material and the first material are overlapped based on the generated brightness histogram.

## Description

### [BACKGROUND OF THE INVENTION]

### 1. Field of the Invention

The present disclosure relates to a system and apparatus for inspecting a coating state and an operation method thereof.

### 2. Description of the Related Art

As the development and demand for various portable electronic devices increase, the demand for a secondary battery as an energy source for the portable electronic devices is also rapidly increasing. In particular, the development and demand for the lithium secondary battery having a high energy density and voltage, long cycle life, and low self-discharge rate are increasing. In addition, the secondary battery is recently being used in an electric vehicle (EV), a hybrid electric vehicle (Hybrid EVs), and an energy storage system (ESS).

In general, the secondary battery may have a structure in which an electrode assembly including a cathode, a separation membrane and an anode laminated therein is immersed in an electrolyte. Such a secondary battery has a risk that the cathode and the anode may come into contact (short circuit) when exposed to a high temperature. For example, if the temperature rises due to exposure to an external heat source, an internal short circuit, etc., thereby causing the separation membrane to shrink, a part of the cathode and a part of the anode may come into contact with each other.

A partial area of the cathode and/or the anode is coated with an insulation material to prevent the cathode and the anode from coming into contact with each other. However, if it is not properly coated with the insulation material, short circuit between the cathode and the anode cannot be prevented. Accordingly, a method for accurately inspecting the coating state of the insulation material is required.

### [SUMMARY OF THE INVENTION]

According to one aspect of the present disclosure, it is an object to provide a system and apparatus for inspecting a coating state, and an operation method thereof, which are capable of improving accuracy in estimation of an overlapping section where coatings are overlapped.

According to another aspect of the present disclosure, it is an object to provide a system and apparatus for inspecting a coating state, and an operation method thereof, which are capable of improving quality uniformity for the captured image.

The system and apparatus for inspecting a coating state and its operation method of the present disclosure may be widely applied to green technology fields such as an electric vehicle, and a battery charging station, as well as other solar power generation and wind power generation using the batteries. In addition, the system and apparatus for inspecting a coating state and its operation method of the present disclosure may be used in an eco-friendly electric vehicle, and a hybrid vehicle, etc., which are intended to prevent climate change by suppressing air pollution and greenhouse gas emissions.

To achieve the above objects, according to an aspect of the present invention, there is provided an operation method of an apparatus for inspecting a coating state, which includes: using a photographing module, photographing at least a partial area of a base plate which includes a first area coated with a first material and a second area not coated with the first material, wherein a partial area of the first material and a partial area of the second area are coated with a second material, to obtain an inspection image; generating a brightness histogram related to a brightness of the inspection image based on a pre-trained brightness distribution estimation model; and estimating an overlapping section where the second material and the first material are overlapped based on the generated brightness histogram.

According to an embodiment, the step of generating a brightness histogram may include: identifying the brightness of each pixel of the inspection image; and generating a brightness histogram including a first Gaussian distribution for the first area and a second Gaussian distribution for the second area based on the identified brightness of each pixel.

According to an embodiment, the step of estimating an overlapping section may include: estimating a first mean and a first standard deviation for the first Gaussian distribution, and calculating a first reference point based on the first mean and the first standard deviation; estimating a second mean and a second standard deviation for the second Gaussian distribution, and calculating a second reference point based on the second mean and the second standard deviation; and estimating a section between the first reference point and the second reference point as the overlapping section.

According to an embodiment, the first reference point may be set as a value which is larger than the first mean of the first Gaussian distribution by three times of the first standard deviation, and the second reference point may be set as a value which is smaller than the second mean of the second Gaussian distribution by three times of the second standard deviation.

According to an embodiment, the method may further include: measuring a photographing brightness; checking whether the photographing brightness is a designated reference brightness or less; and if the photographing brightness is the reference brightness or less, requesting adjustment of the photographing brightness.

According to an embodiment, the method may further include, if the photographing brightness is the reference brightness or less, providing an alarm for adjustment of the photographing brightness.

According to an embodiment, the method may further include: measuring a size of a width of the estimated overlapping section; checking whether the size of the width of the measured overlapping section is a designated reference size or less; and if the size of the width of the measured overlapping section is the reference size or less, determining that the coating state is defective.

According to an embodiment, the method may further include, if the size of the width of the measured overlapping section is the reference size or less, providing an alarm for the defect of the coating state.

According to an embodiment, the second material may be transparent or translucent, or have a color.

According to an embodiment, the base plate may include an electrode plate of a secondary battery, the first material may include an electrode active material, and the second material may include an insulation material.

According to another aspect of the present invention, there is provided an apparatus for inspecting a coating state, which includes: a memory configured to store a pre-trained brightness distribution estimation model; a photographing module configured to photograph at least a partial area of a base plate which includes a first area coated with a first material and a second area not coated with the first material, wherein a partial area of the first material and a partial area of the second area are coated with a second material, to obtain an inspection image; and a processor configured to generate a brightness histogram related to a brightness of the inspection image based on the brightness distribution estimation model, and estimate an overlapping section where the second material and the first material are overlapped based on the generated brightness histogram.

According to an embodiment, the processor may identify the brightness of each pixel of the inspection image, and generate a brightness histogram including a first Gaussian distribution for the first area and a second Gaussian distribution for the second area based on the identified brightness of each pixel.

According to an embodiment, the processor may estimate a first mean and a first standard deviation for the first Gaussian distribution, and calculate a first reference point based on the first mean and the first standard deviation, estimate a second mean and a second standard deviation for the second Gaussian distribution, and calculate a second reference point based on the second mean and the second standard deviation, and estimate a section between the first reference point and the second reference point as the overlapping section.

According to an embodiment, the processor may set the first reference point as a value which is larger than the first mean of the first Gaussian distribution by three times of the first standard deviation, and set the second reference point as a value which is smaller than the second mean of the second Gaussian distribution by three times of the second standard deviation.

According to an embodiment, the apparatus may further include a brightness measurement module configured to measure a photographing brightness, wherein the processor may check whether the photographing brightness is a designated reference brightness or less, and if the photographing brightness is the reference brightness or less, may request adjustment of the photographing brightness.

According to an embodiment, the apparatus may further include an alarm module configured to, if the photographing brightness the reference brightness or less, provide an alarm for adjustment of the photographing brightness.

According to an embodiment, the processor may measure a size of a width of the estimated overlapping section, check whether the size of the width of the measured overlapping section is a designated reference size or less, and if the size of the width of the measured overlapping section is the reference size or less, determine that the coating state is defective.

According to an embodiment, the apparatus may further include an alarm module configured to, if the size of the width of the measured overlapping section is the reference size or less, provide an alarm for the defect of the coating state.

According to an embodiment, the base plate may include an electrode plate of a secondary battery, the first material may include an electrode active material, and the second material may include an insulation material.

In addition, according to another aspect of the present invention, there is provided a system for inspecting a coating state, including: a transfer device configured to transfer an inspection object coated with a first material and a second material which are overlapped in a partial section; and a coating inspection apparatus configured to photograph the inspection object using a photographing module to obtain an inspection image, generate a brightness histogram related to a brightness of the inspection image based on a pre-trained brightness distribution estimation model, estimate an overlapping section where the second material and the first material are overlapped based on the generated brightness histogram, and inspect the coating state based on the estimated overlapping section.

According to an embodiment, the present disclosure may accurately identify a section (hereinafter, "overlapping section") where a first material and a second material are overlapped and coated. For example, the present disclosure may accurately estimate a section where an electrode active material and an insulation material are overlapped when manufacturing the secondary battery.

In addition, the present disclosure may improve the uniformity of quality (e.g., maintain constant brightness) for the captured image obtained by photographing a subject to be inspected for a coating state. In other words, the present disclosure may maintain the quality of the captured image at a constant level, thereby constantly maintaining a level of inspection of the coating state.

### [BRIEF DESCRIPTION OF THE DRAWINGS]

The above and other objects, features and other advantages of the present invention will be more clearly understood from the following detailed description taken in conjunction with the accompanying drawings, in which:
FIG. 1 is a view schematically illustrating a system for inspecting an electrode coating state of a secondary battery according to an embodiment of the present disclosure;
FIG. 2A is a view illustrating an electrode area coated with an insulation material of a secondary battery according to an embodiment of the present disclosure;
FIG. 2B is a cross-sectional view taken on line A-A' of FIG. 2A;
FIG. 3A is a flowchart for describing procedures of a method for inspecting an electrode coating state of a secondary battery according to an embodiment of the present disclosure;
FIG. 3B is a flowchart for describing in more detail procedures of a method for generating a brightness histogram and a method for estimating an overlapping section according to an embodiment of the present disclosure;
FIG. 4 is a view illustrating brightness measurement results of pixels included in an image according to an embodiment of the present disclosure;
FIG. 5 is a view illustrating a brightness histogram according to an embodiment of the present disclosure;
FIG. 6 is a flowchart for describing procedures of a method for inspecting a coating defect according to an embodiment of the present disclosure;
FIG. 7 is a flowchart for describing procedures of a method for controlling a photographing environment according to an embodiment of the present disclosure; and
FIG. 8 is a block diagram illustrating the configuration of an apparatus for inspecting an electrode coating state of a secondary battery according to an embodiment of the present disclosure.

### [DETAILED DESCRIPTION OF THE INVENTION]

Hereinafter, a present disclosure will be described in detail through embodiments with reference to the accompanying drawings. However, the embodiments are merely illustrative and the present disclosure is not limited to the specific embodiments described by way of example.

Although a first, a second, and the like are used to describe various elements, components and/or sections, these elements, components and/or sections are of course not limited by these terms. These terms are merely used to distinguish one element, component and/or section from another element, component and/or section. Therefore, it goes without saying that the first element, first component or first section mentioned below may also be the second element, second component or second section within the technical spirit of the present disclosure.

Terms used herein are for the purpose of describing particular embodiments only and are not intended to limit the present disclosure thereto. As used herein, singular forms are intended to include the plural forms as well, unless the context clearly indicates otherwise. It will be further understood that the terms "comprises" and/or "made of," as used herein, do not preclude the presence or addition of one or more components, steps, operations and/or elements other than those mentioned component, step, operation and/or element.

Unless otherwise defined, all terms (including technical and scientific terms) used herein have the same meaning as commonly understood by one of ordinary skill in the art to which the present disclosure pertains. Terms, such as those defined in commonly used dictionaries, are not to be construed in an idealized or overly formal sense unless expressly so defined herein.

The present disclosure may accurately estimate a section where a first material and a second material are overlapped with each other based on a brightness distribution estimation model (e.g., a Gaussian mixture model) when a base plate is coated with the first material and the second material to be partially overlapped. Hereinafter, for the convenience of description, the present disclosure will be described in detail through an example of estimating an overlapping section where an electrode plate of a secondary battery is coated with an electrode active material and an insulation material to be partially overlapped based on the pre-trained brightness distribution estimation model (e.g., a Gaussian mixture model).

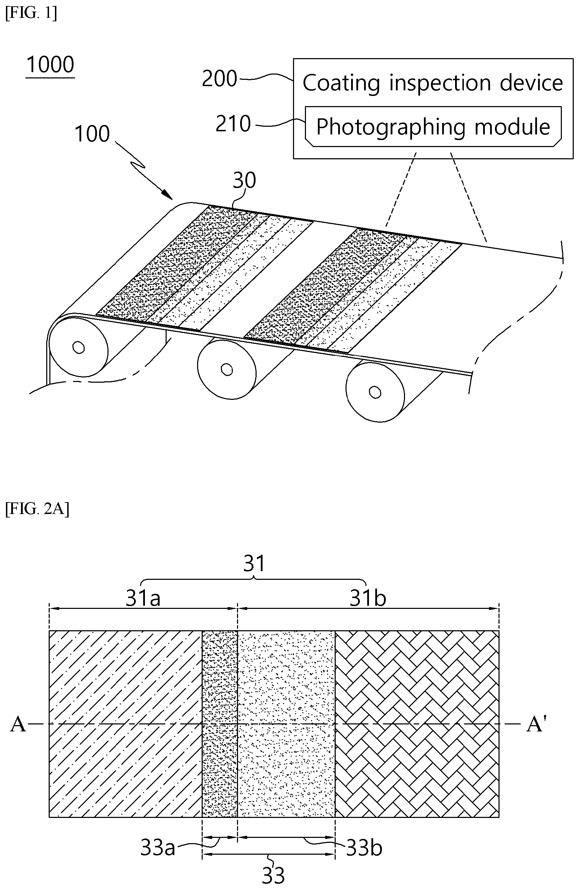

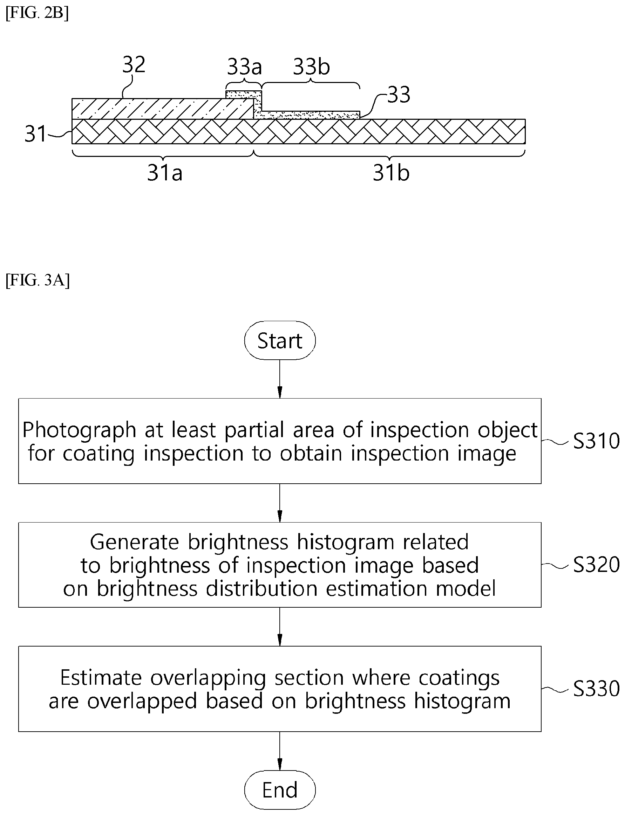

FIG. 1 is a view schematically illustrating a system for inspecting an electrode coating state of a secondary battery according to an embodiment of the present disclosure, FIG. 2A is a view illustrating an electrode area coated with an insulation material of a secondary battery according to an embodiment of the present disclosure, and FIG. 2B is a cross-sectional view taken on line A-A' of FIG. 2A.

Referring to FIGS. 1 to 2B, a system 1000 for inspecting an electrode coating state of a secondary battery according to an embodiment of the present disclosure may include a transfer device 100 and a coating inspection apparatus 200.

The transfer device 100 may transfer an inspection object 30 to be inspected for the coating state. For example, the transfer device 100 may transfer the inspection object 30 to a lower side of the coating inspection apparatus 200 (e.g., a lower side of a photographing module 210 of the coating inspection apparatus 200). The transfer device 100 may include a linear motion system (LMS). According to an embodiment, the inspection object 30 may be a partial configuration of a secondary battery. For example, the inspection object 30 may include an electrode plate 31, an electrode active material 32, and an insulation material 33, as shown in FIGS. 2A and 2B.

The electrode plate 31 may be coated with the electrode active material 32 on one surface or both surfaces. The electrode plate 31 may include a first area (or, referred to as a coated portion) 31a which is coated with the electrode active material 32 and a second area (or, referred to as a non-coated portion) 31b which is not coated with the electrode active material 32. In addition, the electrode plate 31 may be further coated with the insulation material 33. For example, in the electrode plate 31, a partial area of the electrode active material 32 and a partial area of the second area 31b may be coated with the insulation material 33.

The electrode plate 31 may be a base substrate to be coated with the electrode active material 32. The electrode plate 31 may be a cathode plate or an anode plate. The electrode plate 31 may be formed of aluminum or copper. For example, the electrode plate 31 may be formed of aluminum in the case of the cathode plate, and the electrode plate 31 be formed of copper in the case of the anode plate.

The electrode active material 32 is a material involved in an electrode reaction of the secondary battery, and may be applied to a first area 31a of one surface or both surfaces of the electrode plate 31. The electrode active material 32 may include a solid material such as PbO₂, MnO₂, or Ni₂O₃, etc. that can perform a role of an oxidant when used for the cathode. Meanwhile, the electrode active material 32 may include a non-metallic material such as zinc or lead, etc. that can act as a reducing agent when used for the anode.

The insulation material 33 may be applied to a peripheral area of a boundary between the first area 31a and the second area 31b. The insulation material 33 may be coated so as to be overlapped with a partial area of the electrode active material 32 and a partial area of the second area 31b of the electrode plate 31, as shown in FIGS. 2A and 2B. The insulation material 33 may include a third area (hereinafter, an overlapping section) 33a which is overlapped with the electrode active material 32 and a fourth area 33b which is not overlapped with the electrode active material 32. The insulation material 33 may be formed of a transparent material or a translucent material. Alternatively, the insulation material 33 may have a color (e.g., a color similar to that of the electrode active material 32) added thereto. The insulation material may be a liquid state, and may be cured and changed into a solid state after being applied to a partial area of the electrode active material 32 and a partial area of the second area 31b of the electrode plate 31, but it is not limited thereto.

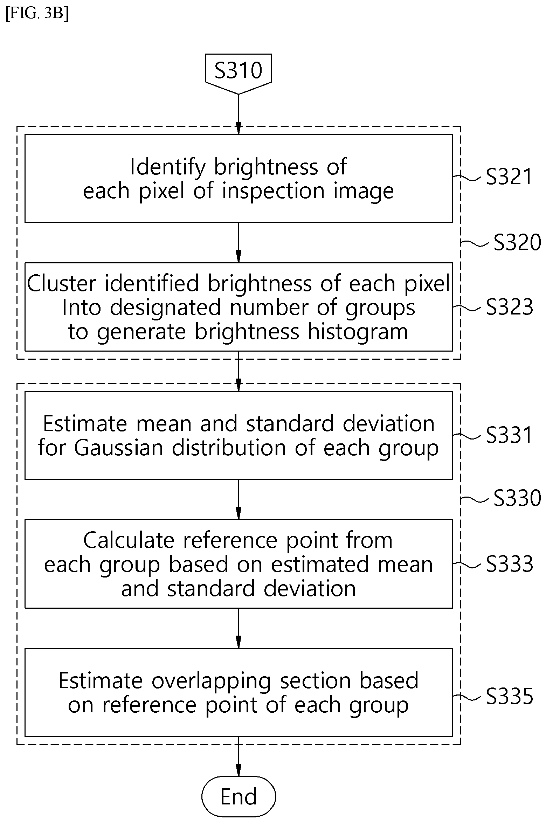

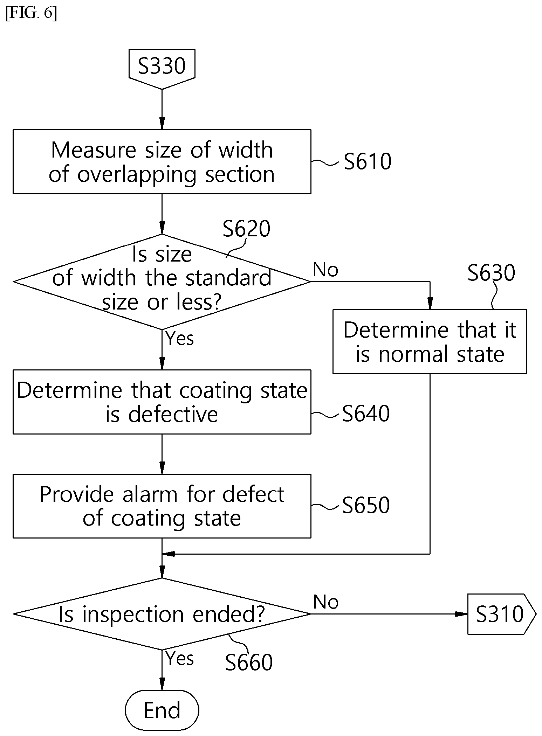

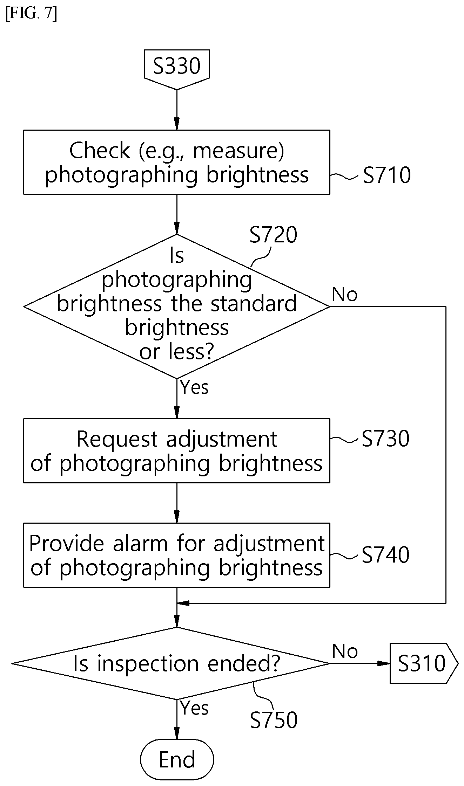

The coating inspection apparatus 200 may inspect the coating state of the insulation material 33. For example, the coating inspection apparatus 200 may accurately identify an overlapping section 33a of the electrode active material 32 and the insulation material 33. Specifically, the coating inspection apparatus 200 may photograph the inspection object 30 using the photographing module 210, generate a brightness histogram of the image obtained by photographing the inspection object 30 based on the pre-trained brightness distribution estimation model, and identify the overlapping section 33a using the generated brightness histogram. The brightness distribution estimation model may include a Gaussian mixture model, but it is not limited thereto, which will be described in detail below with reference to FIGS. 3 to 5B. In addition, the coating inspection apparatus 200 may measure a width of the overlapping section 33a, and compare the measured width with a reference size to determine whether the coating is defective, which will be described in detail below with reference to FIG. 6. Further, the coating inspection apparatus 200 may maintain the photographing brightness while performing the coating inspection, in order to obtain a high quality image (e.g., an image with a predetermined quality or higher). To this end, although not shown in FIG. 1, the system 1000 may include a light emitting module (e.g., a light emitting diode (LED)) in the photographing module 210 of the coating inspection apparatus 200, or may include an external light separately, which will be described in detail below with reference to FIG. 7.

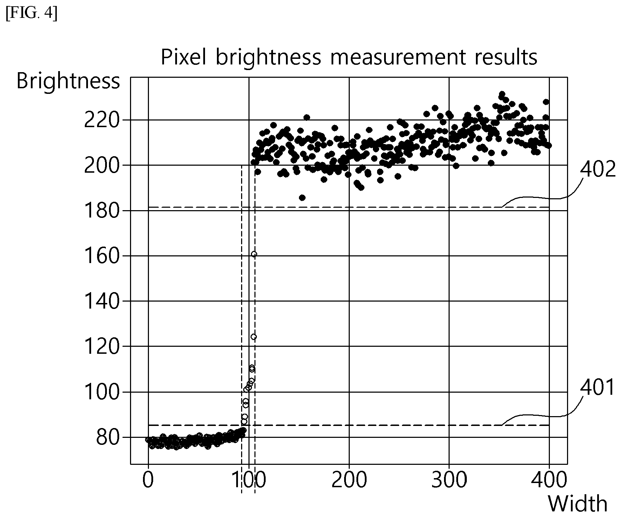

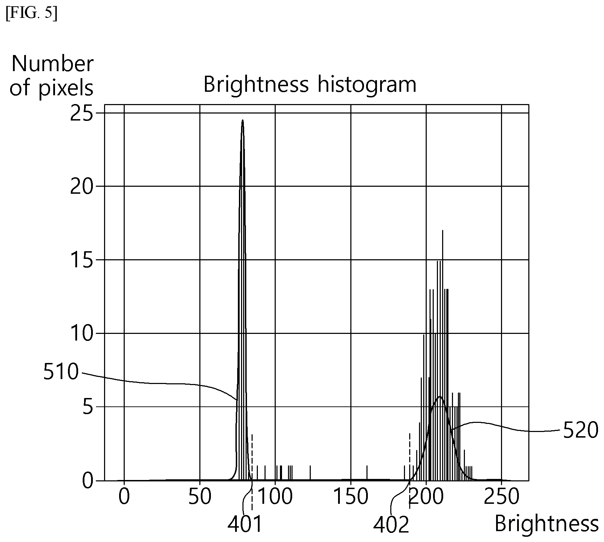

FIG. 3A is a flowchart for describing procedures of a method for inspecting an electrode coating state of a secondary battery according to an embodiment of the present disclosure, FIG. 3B is a flowchart for describing in more detail procedures of a method for generating a brightness histogram and a method for estimating an overlapping section according to an embodiment of the present disclosure, FIG. 4 is a view illustrating brightness measurement results of pixels included in an image according to an embodiment of the present disclosure, and FIG. 5 is a view illustrating a brightness histogram according to an embodiment of the present disclosure.

Referring to FIGS. 3A to 5, the method for inspecting an electrode coating state of a secondary battery according to an embodiment of the present disclosure (hereinafter, a coating inspection method) may include a step S310 of photographing at least a partial area of the inspection object for coating inspection to obtain an inspection image. For example, the coating inspection apparatus 200 of FIG. 1 may obtain an inspection image by photographing at least a partial area of the inspection object using the photographing module 210. According to an embodiment, the inspection object may include a base plate which includes the first area 31a coated with a first material and the second area 31b not coated with the first material, wherein a partial area of the first material and a partial area of the second area 31b are coated with a second material. Here, the first material, the second material, and the base plate may be the electrode active material 32, the insulation material 33, and an electrode plate 31, respectively, but they are not limited thereto.

The coating inspection method may include a step S320 of generating a brightness histogram related to the brightness of the inspection image based on the brightness distribution estimation model (e.g., the Gaussian mixture model). Specifically, referring to FIG. 3B, the step S320 of generating a brightness histogram may include a step S321 of identifying the brightness of each pixel of the inspection image and a step S323 of clustering the identified brightness of each pixel into a designated number of groups (e.g., 2) to generate a brightness histogram. For example, the coating inspection apparatus 200 of FIG. 1 may measure the brightness of each pixel included in the inspection image. As shown in brightness measurement results of the pixel of FIG. 4, it can be seen that the brightness of the inspection image increases as it progresses in one direction (e.g., from the left to the right) along a width from one end (e.g., a left end of FIGS. 2A and 2B). The reason is that the first material (e.g., the electrode active material 32) has a dark color (e.g., black), and the base plate (e.g., the electrode plate 31) has a light color (e.g., silver color in the case of the cathode plate, and copper color in the case of the anode plate). Meanwhile, it can be seen that the brightness of the inspection image increases rapidly in the overlapping section 33a. The reason is that the second material (e.g., the insulation material 33) is brighter than the first material (e.g., the electrode active material 32) but has a darker color (e.g., a color similar to the first material) than the base plate (e.g., the electrode plate 31), or is transparent (or translucent). At this time, a first reference point 401 at which the brightness of the pixel rapidly increases may be a start point of the overlapping section 33a, and the second reference point 402 at which the rapid increase in brightness stops may be the end point of the overlapping section 33a.

In addition, the coating inspection apparatus 200 may generate a brightness histogram by clustering the brightness of each pixel of the inspection image into a designated number of groups (e.g., 2) based on the brightness of each pixel using the brightness distribution estimation model (e.g., Gaussian mixture model), as shown in FIG. 5. The brightness histogram may include a first Gaussian distribution 510 for the first area 31a and a second Gaussian distribution 520 for the second area 31b.

The coating inspection method may include a step S330 of estimating an overlapping section where the coatings are overlapped based on the brightness histogram. For example, the coating inspection apparatus 200 of FIG. 1 may estimate an overlapping section where the second material and the first material are overlapped based on the brightness histogram. Specifically, referring to FIG. 3B, the step S330 of estimating an overlapping section may include a step S331 of estimating a mean and a standard deviation for a Gaussian distribution of each group, a step S333 of calculating a reference point from each group based on the estimated mean and standard deviation, and a step S335 of estimating the overlapping section based on the reference point of each group. For example, the coating inspection apparatus 200 may estimate a first mean and a first standard deviation for the first Gaussian distribution 510, and calculate the first reference point 401 based on the first mean and the first standard deviation. Similarly, the coating inspection apparatus 200 may estimate a second mean and a second standard deviation for the second Gaussian distribution 520, and may calculate a second reference point 402 based on the second mean and the second standard deviation. The coating inspection apparatus 200 may estimate a section between the first reference point 401 and the second reference point 402 as the overlapping section 33a. The first reference point 401 may be set as a value which is larger than the first mean of the first Gaussian distribution 510 by three times of the first standard deviation. In addition, the second reference point 402 may be set as a value which is smaller than the second mean of the second Gaussian distribution 520 by three times of the second standard deviation.

FIG. 6 is a flowchart for describing procedures of a method for inspecting a coating defect according to an embodiment of the present disclosure.

Referring to FIG. 6, the method for inspecting a coating defect according to an embodiment of the present disclosure (hereinafter, a coating defect inspection method) may include a step S610 of measuring a size of the width of the overlapping section. For example, when the estimation of the overlapping section is completed through the process described above in FIGS. 3A and 3B, the coating inspection apparatus 200 of FIG. 1 may measure the size of the estimated overlapping section.

The coating defect inspection method may include a step S620 of checking whether the size of the width is a designated reference size or less. For example, the coating inspection apparatus 200 may compare the measured size of the width with the reference size to check whether the size of the width is the reference size or less.

As a result of the check in the step S620, if the size of the width is not the reference size or less (e.g., if the size of the width exceeds the reference size), the method may proceed to a step S630 of determining that it is in a normal state. In other words, the coating inspection apparatus 200 may determine that the size of the overlapping section is sufficient to prevent (or block) the cathode and the anode from coming into contact with each other even if the separation membrane shrinks due to various causes (e.g., a high temperature). On the other hand, as a result of the check in the step S620, if the size of the width is the reference size or less, the method may proceed to a step S640 of determining that the coating state is defective. In other words, the coating inspection apparatus 200 may determine that there is a possibility where the cathode and the anode will come into contact with each other when the separation membrane shrinks due to various causes (e.g., the high temperature).

The coating defect inspection method may include a step S650 of providing an alarm to notify the defect of the coating state. For example, the coating inspection apparatus 200 may provide an alarm in an auditory manner, visual manner, and/or tactile manner.

The coating defect inspection method may include a step S660 for checking whether the inspection is ended. For example, the coating inspection apparatus 200 may check whether an inspection object exists in the transfer device 100 through the photographing module 210 (or a separate detection module (not shown)). As a result of the check in the step S660, if the inspection is not ended, the method may return to the step S410 to repeat the above-described process. On the other hand, as a result of the check in the step S660, if the inspection is ended (e.g., if the inspection object does not exist in the transfer device 100), the method may be ended.

FIG. 7 is a flowchart for describing procedures of a method for controlling a photographing environment according to an embodiment of the present disclosure.

Referring to FIG. 7, a method for controlling a photographing environment according to an embodiment of the present disclosure (hereinafter, a photographing environment control method) may include a step S710 of checking (e.g., measuring) a photographing brightness. For example, the coating inspection apparatus 200 of FIG. 1 may continuously or periodically check the photographing brightness. According to an embodiment, the coating inspection apparatus 200 may determine an average brightness of the second area (or the non-coated area) as the photographing brightness. As another example, the coating inspection apparatus 200 may measure the photographing brightness through an illuminance sensor (not shown).

The photographing environment control method may include a step S720 of checking whether the photographing brightness is a designated reference brightness or less. For example, the coating inspection apparatus 200 may compare the measured photographing brightness with the reference brightness to check whether the photographing brightness is the reference brightness or less. As a result of the check in the step S720, if the photographing brightness is not the reference brightness or less (e.g., if the photographing brightness exceeds the reference brightness), the method may proceed to a step S750 to be described below. In other words, the coating inspection apparatus 200 may determine that the current photographing brightness is sufficient to obtain a high-quality inspection image, and thus adjustment of the photographing brightness is not necessary. On the other hand, as a result of the check in the step S720, if the photographing brightness is the reference brightness or less, the method may proceed to a step S730 of requesting the adjustment of the photographing brightness. In other words, the coating inspection apparatus 200 may determine that the current photographing brightness is not sufficient to obtain a high-quality inspection image, and thus adjustment of the photographing brightness is necessary. For example, the coating inspection apparatus 200 may activate a light emitting module (e.g., an LED) included in the photographing module 210. Alternatively, the coating inspection apparatus 200 may transmit a message to an external lighting module (not shown) for requesting the adjustment of brightness.

The photographing environment control method may include a step S740 of providing an alarm for the adjustment of the photographing brightness. For example, the coating inspection apparatus 200 may provide an alarm in an auditory manner, visual manner, and/or tactile manner.

The photographing environment control method may include a step S750 of checking whether the inspection is ended. For example, the coating inspection apparatus 200 may check whether an inspection object exists in the transfer device 100 through the photographing module 210 (or the separate detection module (not shown)). As a result of the check in the step S750, if the inspection is not ended, the method may return to the step S410 to repeat the above-described process. On the other hand, as a result of the check in the step S750, if the inspection is ended (e.g., if an inspection object does not exist in the transfer device 100), the method may be ended.

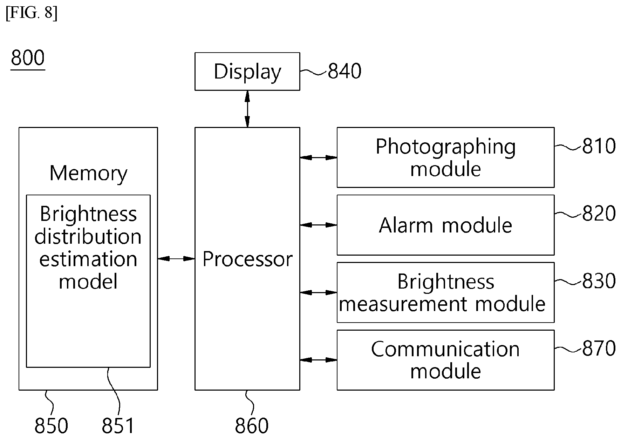

FIG. 8 is a block diagram illustrating the configuration of an apparatus for inspecting an electrode coating state of a secondary battery according to an embodiment of the present disclosure.

Referring to FIG. 8, the apparatus for inspecting an electrode coating state of a secondary battery (hereinafter, a coating inspection apparatus) 800 according to an embodiment of the present disclosure may include a photographing module 810, an alarm module 820, a brightness measurement module 830, a display 840, a memory 850, a processor (or a controller) 860, and a communication module 870.

The photographing module 810 (e.g., a camera) may photograph a subject. For example, the photographing module 810 may photograph at least a partial area of an inspection object for coating inspection to obtain an inspection image. According to an embodiment, the photographing module 810 may include a light emitting module (e.g., an LED).

The alarm module 820 may generate an alarm in a designated manner when a designated condition is satisfied. For example, the alarm module 820 may provide (or generate) an alarm when a defect in the coating state is detected. In addition, the alarm module 820 may provide an alarm for adjustment of the photographing brightness. The alarm module 820 may generate at least one of a visual alarm (e.g., light emitting diode (LED) lighting, icon display, pop-up window display, etc.), an auditory alarm (e.g., sound effect output) and/or a tactile alarm (e.g., vibration generation). To this end, the alarm module 820 may include at least one of a light emitting diode, a display, a speaker, and a vibration motor.

The brightness measurement module 830 (e.g., a light sensor) may measure the brightness of the photographing environment (e.g., external illuminance) where the inspection obj ect is photographed. For example, when inspecting a coating defect of the second material, the brightness measurement module 830 may measure the photographing brightness of the inspection object and transmit the measurement result to the processor 860 or store it in the memory 850.

The display 840 may display various information (e.g., brightness measurement results, brightness histogram, inspection results for coating defects, etc.) on a screen thereof. According to some embodiments, the display 840 may include a touch panel (not shown) for receiving various inputs of a user for operating the coating inspection apparatus 800.

The memory 850 may store a program that controls an operation of the coating inspection apparatus 800 and/or information necessary to control the operation of the coating inspection apparatus 800. The memory 850 may include (e.g., store) a brightness distribution estimation model 851. The brightness distribution estimation model 851 may generate a brightness histogram for the inspection image. For example, the brightness distribution estimation model 851 may estimate a brightness distribution of the inspection image and generate a brightness histogram based on the estimated brightness distribution. The brightness distribution estimation model 851 may be a pre-trained artificial intelligence model. For example, the brightness distribution estimation model 851 may be the pre-trained Gaussian mixture model, but it is not limited thereto. The generation of the brightness histogram has been described in detail above with reference to FIGS. 3A to 5, and therefore it will not be described.

The processor 860 may control an overall operation of the coating inspection apparatus 800. For example, the processor 860 may receive commands or instructions from the memory 850, and control each component according to the received commands or instructions to perform various functions. The processor 860 may be formed of a central processing unit (CPU), a micro control unit (MCU), a micro processor unit (MPU) and the like.

According to an embodiment, the processor 860 may estimate an overlapping section where the coatings are overlapped by controlling the configurations of the coating inspection apparatus 800. For example, the processor 860 may capture an inspection object to perform a coating inspection through the photographing module 810 to obtain an inspection image, generate a brightness histogram of the inspection image based on the brightness distribution estimation model 851, and estimate an overlapping section based on the brightness histogram, which has been described in detail above with reference to FIGS. 3A and 3B, and therefore it will not be described. As another example, the processor 860 may determine whether the coating state is defective by comparing the width of the overlapping section with the reference size, which has been described in detail above with reference to FIG. 6, and therefore it will not be described. As another example, the processor 860 may control the photographing brightness in order to obtain an inspection image of a predetermined level or higher (e.g., a high-quality inspection image), which has been described in detail above with reference to FIG. 6, and therefore it will not be described.

The communication module 870 may communicate with an external device (e.g., an external lighting, a portable terminal (e.g., a smart phone) of a manager, etc.) through wired or wireless communication. For example, when the processor 860 determines that the coating defect has occurred, the communication module 870 may transmit an alarm to the external device (e.g., the portable terminal of the manager). Alternatively, when the processor 860 determines that adjustment of the photographing brightness is necessary, the communication module 870 may transmit a message for requesting the adjustment of the photographing brightness to the external lighting (not shown).

Meanwhile, the coating inspection apparatus 800 may not include some of the above-described components, or may further include other components. For example, the coating inspection apparatus 800 may not include the alarm module 820 when an alarm is not provided, may not include the brightness measurement module 830 when the photographing brightness is measured as the average brightness of the second area, and/or may not include the communication module 870 when not connected to the external device. As another example, the coating inspection apparatus 800 may further include an input module that receives an input (e.g., an operation command) of a user. In addition, some of the components of the coating inspection apparatus 800 may be configured as a separate external device. For example, the brightness distribution estimation model 851 of the coating inspection apparatus 800 may be included in an external server (e.g., an artificial intelligence server) (not shown).

The contents described above are merely an example to which the principles of the present disclosure are applied, and other configurations may be further included in the present disclosure without departing from the scope of the present invention. For example, at least some of the above-described various embodiments of the present disclosure may be combined.

## Claims

1. An operation method of an apparatus for inspecting a coating state, the method comprising:
using a photographing module, photographing at least a partial area of a base plate which comprises a first area coated with a first material and a second area not coated with the first material, wherein a partial area of the first material and a partial area of the second area are coated with a second material, to obtain an inspection image;
generating a brightness histogram related to a brightness of the inspection image based on a pre-trained brightness distribution estimation model; and
estimating an overlapping section where the second material and the first material are overlapped based on the generated brightness histogram.

2. The method according to claim 1, wherein the step of generating a brightness histogram comprises:
identifying the brightness of each pixel of the inspection image; and
generating a brightness histogram comprising a first Gaussian distribution for the first area and a second Gaussian distribution for the second area based on the identified brightness of each pixel.

3. The method according to claim 2, wherein the step of estimating an overlapping section comprises:
estimating a first mean and a first standard deviation for the first Gaussian distribution, and calculating a first reference point based on the first mean and the first standard deviation;
estimating a second mean and a second standard deviation for the second Gaussian distribution, and calculating a second reference point based on the second mean and the second standard deviation; and
estimating a section between the first reference point and the second reference point as the overlapping section.

4. The method according to claim 3, wherein the first reference point is set as a value which is larger than the first mean of the first Gaussian distribution by three times of the first standard deviation, and
the second reference point is set as a value which is smaller than the second mean of the second Gaussian distribution by three times of the second standard deviation.

5. The method according to anyone of claims 1-4, further comprising:
measuring a photographing brightness;
checking whether the photographing brightness is a designated reference brightness or less; and
if the photographing brightness is the reference brightness or less, requesting adjustment of the photographing brightness.

6. The method according to claim 5, further comprising, if the photographing brightness is the reference brightness or less, providing an alarm for adjustment of the photographing brightness.

7. The method according to anyone of claims 1-6, further comprising:
measuring a size of a width of the estimated overlapping section;
checking whether the size of the width of the measured overlapping section is a designated reference size or less; and
if the size of the width of the measured overlapping section is the reference size or less, determining that the coating state is defective.

8. The method according to claim 7, further comprising, if the size of the width of the measured overlapping section is the reference size or less, providing an alarm for the defect of the coating state.

9. The method according to anyone of claims 1-8, wherein the second material is transparent or translucent, or has a color.

10. The method according to anyone of claims 1-9, wherein the base plate comprises an electrode plate of a secondary battery,
the first material comprises an electrode active material, and
the second material comprises an insulation material.

11. An apparatus for inspecting a coating state, the apparatus comprising:
a memory configured to store a pre-trained brightness distribution estimation model;
a photographing module configured to photograph at least a partial area of a base plate which comprises a first area coated with a first material and a second area not coated with the first material, wherein a partial area of the first material and a partial area of the second area are coated with a second material, to obtain an inspection image; and
a processor configured to generate a brightness histogram related to a brightness of the inspection image based on the brightness distribution estimation model, and estimate an overlapping section where the second material and the first material are overlapped based on the generated brightness histogram.

12. The apparatus according to claim 11, wherein the processor identifies the brightness of each pixel of the inspection image, and generates a brightness histogram comprising a first Gaussian distribution for the first area and a second Gaussian distribution for the second area based on the identified brightness of each pixel.

13. The apparatus according to claim 12, wherein the processor
estimates a first mean and a first standard deviation for the first Gaussian distribution, and calculates a first reference point based on the first mean and the first standard deviation,
estimates a second mean and a second standard deviation for the second Gaussian distribution, and calculates a second reference point based on the second mean and the second standard deviation, and
estimates a section between the first reference point and the second reference point as the overlapping section.

14. The apparatus according to claim 13, wherein the processor
sets the first reference point as a value which is larger than the first mean of the first Gaussian distribution by three times of the first standard deviation, and
sets the second reference point as a value which is smaller than the second mean of the second Gaussian distribution by three times of the second standard deviation.

15. A system for inspecting a coating state, comprising:
a transfer device configured to transfer an inspection object coated with a first material and a second material which are overlapped in a partial section; and
a coating inspection apparatus configured to photograph the inspection object using a photographing module to obtain an inspection image, generate a brightness histogram related to a brightness of the inspection image based on a pre-trained brightness distribution estimation model, estimate an overlapping section where the second material and the first material are overlapped based on the generated brightness histogram, and inspect the coating state based on the estimated overlapping section.
